# FASCICULE DE BREVET EUROPEEN

(11) **EP 1 139 637 B1**
(45) Date de publication et mention de la délivrance du brevet: **19.10.2005**
(21) Numéro de dépôt: 01460013.4
(22) Date de dépôt: 20.02.2001
(51) Int. Cl.: H04L 29/06, G06F 17/60, H04L 29/12

(54) **Procédé et système d'octroi de privilèges par un gestionnaire d'accès au sein d'un réseau de communication**
Verfahren und System zur Privilegienverleihung von einem Zugriffsverwalter in einem Kommunikationsnetzwerk
Method and system to have privileges granted by an access manager in a communications network

(30) Priorité: 29.02.2000 FR 0002575; 22.11.2000 FR 0015103
(43) Date de publication de la demande: 04.10.2001
(73) Titulaire: Cegetel Groupe, 75008 Paris (FR)
(72) Inventeur: Bouthors, Nicolas M, 38240 Meylan (FR)
(74) Mandataire: Vidon, Patrice

(56) Documents cités:
- EP-A- 0 811 939
- EP-A- 0 848 338
- EP-A- 0 889 418
- EP-A- 0 986 230
- WO-A-97/11429
- WO-A-98/12643
- WO-A-99/57865
- US-A- 5 761 683

## Description

Le domaine de l'invention est celui de la gestion des accès au sein d'un réseau de communication interconnectant une pluralité de sites. On suppose dans la suite de la description que le client peut sélectivement accéder à chacun des sites, via un terminal, en activant un lien d'accès correspondant au site de son choix.

Plus précisément, l'invention concerne un procédé et un système d'octroi de privilèges, associés à de tels liens d'accès, à des clients.

Le réseau de communication peut notamment, mais non exclusivement, être un réseau de type Internet, tel que le réseau mondial Internet. Dans ce cas, les liens d'accès sont des adresses-destinations (ou adresses URL, pour "Uniform Ressource Locator" en anglais) vers des pages d'informations (ou pages Web).

En outre, la présente invention s'applique non seulement lorsque le client accède directement au réseau de communication, mais aussi lorsqu'il y accède par l'intermédiaire d'(au moins) un autre réseau de télécommunication, auquel il est abonné. Cet autre réseau de télécommunication est par exemple le réseau téléphonique commuté ("réseau fixe") ou un réseau de radiocommunication ("réseau mobile").

Dans le cas d'un réseau de radiocommunication, celui-ci utilise par exemple la norme GSM (pour "Global System for Mobile communications" en anglais), ou une norme équivalente ou concurrente telle que DCS 1800 (pour "Digital Cellular System à 1800 Mhz", en anglais), PCS 1900 (pour "Personal Communication System à 1900 MHz" en anglais), DECT (pour "Digital European Cordless Telecommunications" en anglais, GPRS (pour "General Packet Radio Service" en anglais) ou UTMS (pour "Universal Mobile Télécommunication System" en anglais).

Afin d'expliquer les inconvénients de l'art antérieur en terme de gestion des accès, on rappelle maintenant la technique actuelle de gestion de l'accès à une page Web, au sein du réseau Internet. Classiquement, une page Web peut être associée soit à un site (page d'accueil), soit à une partie d'un site (autre(s) page(s) du site). Chaque page Web peut éventuellement aussi correspondre à un service d'un site.

Il est clair que les inconvénients qui vont être décrits à travers cet d'exemple illustratif sont communs aux autres techniques de gestion d'accès de l'art antérieur.

On suppose que le client est abonné à un réseau de télécommunication interconnecté au réseau Internet. Via son terminal (ou "équipement de réseau"), il fait une demande de connexion au réseau Internet auprès de son fournisseur d'accès (ou "provider"), qui se charge alors d'assurer une communication entre le terminal du client et le réseau Internet. Après que cette communication est établie, le client peut accéder aux différentes pages Web, selon un mode client-serveur. Il dispose pour cela d'un logiciel client compris dans son terminal, à savoir un navigateur (ou "browser"), présentant notamment un mode de fonctionnement direct et un mode de fonctionnement indirect.

Dans le mode de fonctionnement direct, le navigateur utilise des adresses URL que l'utilisateur connaît et communique directement au navigateur.

Dans le mode de fonctionnement indirect, le navigateur utilise des liens hypertextes (ou hyperliens) contenus dans une autre page Web, affichée à l'écran du terminal. Chaque hyperlien comprend d'une part une adresse URL et une zone de lien hypertexte (image et/ou texte) contenue dans la page Web affichée à l'écran du terminal.

Après que le client a fourni une adresse URL, directement par saisie (mode direct) ou indirectement en cliquant sur une zone de lien hypertexte correspondant à une page Web de son choix (mode indirect), le navigateur émet une requête contenant l'adresse URL correspondante. Dans les deux cas, on parle de l'activation du lien d'accès que constitue l'adresse URL.

Cette requête est reçue par le serveur contenant la page Web recherchée (c'est-à-dire dont l'adresse URL a été fournie), afin que par retour cette page Web soit expédiée par le serveur sur le réseau, dans un langage spécial, HTML (pour "Hypertexte MarkUp Language" en anglais). Ce langage contient des instructions (balises) indiquant au navigateur du terminal client comment organiser la page Web à son arrivée.

L'utilisation classique des adresses URL, telle que décrite ci-dessus, présente plusieurs inconvénients et ne permet pas de répondre à tous les besoins.

Tout d'abord, elle ne favorise pas le développement de la promotion commerciale sur Internet. En effet, à défaut d'alternative, la promotion commerciale se concentre aujourd'hui sur des bandeaux (ou bannières) publicitaires, qui sont des zones de lien hypertexte ajoutées à certaines pages Web, et sur lesquelles les internautes peuvent cliquer pour être dirigés vers d'autres pages Web. Un inconvénient de ces bandeaux est qu'ils ne permettent le passage que d'un flot de données commerciales limité, de façon à ne pas augmenter les temps de chargement des pages Web qui les supportent.

Par ailleurs, il est fréquent que le client soit peu enclin, voire même renonce, à aller consulter certaines pages Web, et notamment les pages purement publicitaires, du fait que son temps de connexion à Internet lui est généralement facturé. En effet, actuellement, lorsqu'il souhaite accéder au réseau Internet, le client doit prendre, auprès d'un fournisseur d'accès, un abonnement généralement payant (au forfait, à la durée, ou encore en fonction du niveau des coûts des communications locales). Il est à noter que des abonnements gratuits sont également parfois proposés, mais, dans ce cas, c'est le fournisseur d'accès qui prend à sa charge les frais d'accès. Par conséquent, même dans ce cas, la question de la prise en charge des coûts de connexion demeure.

Il convient donc d'imaginer un mécanisme permettant de ne facturer les coûts d'accès à certaines pages Web, partiellement ou en totalité, ni au client, ni au fournisseur d'accès. Par exemple, un propriétaire de site Web peut souhaiter que son site soit accessible gratuitement, tant pour le client que pour le fournisseur d'accès.

Ce qui précède concernant la fourniture d'informations publicitaires ou commerciales s'applique bien sûr, plus généralement, à la fourniture de tout type d'informations.

En outre, l'utilisation classique des adresses URL ne permet pas de faire, de façon automatique, un filtrage des clients pouvant effectivement avoir accès, en partie ou en totalité, à certains sites (pages d'accueil) et/ou certains services (autres pages Web) particuliers.

Encore un autre inconvénient est qu'elle ne permet pas de distinguer plusieurs circuits distincts d'accès à une adresse URL donnée.

Le document WO 99 57865 A décrit un système de serveurs d'informations réseau supportant des pages de données Web, en particulier un serveur permettant de rediriger des références «hyperlien» externes d'un serveur dans le but de contrôler et comptabiliser ces références. Le problème à résoudre est de suivre ou tracer l'information qui peut être obtenue à partir d'un navigateur d'un client lorsqu'une URL contenant ou propre à un contenu hyperlien publicitaire a été sélectionnée. Dans ce document, la totale opération est effectuée par le serveur de l'éditeur («publisher»), point n'est besoin de tables de re-direction ou de traduction d'URL ni d'équipement intermédiaire du réseau par lequel on fait transiter le lien d'accès. Les URL's «cliquées» sont codées pour permettre à l'éditeur de suivre et mémoriser cette information. Les URL's cliquées, contenant des bannières de publicité, sont ainsi suivies et comptabilisées. Ce document ne mentionne pas la gestion de listes de liens d'accès privilégiés, ni le fait de remplacer dynamiquement un lien d'accès privilégié par un lien d'accès de substitution pour permettre au client d'accéder, via un équipement intermédiaire correspondant au lien d'accès de substitution, à un site ou à un service du site correspondant au lien d'accès privilégié.

Le document WO 98 12643 propose la création et l'utilisation d'adresses URL dynamiques pour le chargement dynamique de pages Web en fonction de la demande d'un utilisateur en adaptant le contenu à la demande dudit utilisateur. On construit une URL qui pointera vers un serveur donné pour un service donné afin qu'un ou plusieurs utilisateurs y envoient leurs requêtes. La technique de ce document repose sur une attribution de noms de domaine faite de façon dynamique à des serveurs afin d'éviter à un client le besoin de choisir parmi un grand nombre de serveurs proposant le même service. Il n'est pas question dans ce document de substituer une URL de re-direction a une URL d'accès privilégié.

Le document WO 97 11429 A concerne un procédé pour rediriger et tracer les parcours de navigation des utilisateurs ou clients qui ont été dirigés vers un second site Web à partir d'un premier site Web, le but étant dans ce cas de conserver l'historique de ce parcours. Une URL composite est reçue au second site Web lorsque le client est dirigé du premier vers le second site. Cette URL composite comporte ainsi deux parties, une première partie correspondant à l'adresse cible c'est-à-dire à l'URL du second site et une seconde partie correspondant à l'identité et donc à l'URL (initiale) du premier site, l'information représentative de l'identité du premier site étant conservée par le second site. Ainsi, l'objet de ce document est de permettre de suivre la navigation d'un utilisateur allant d'un site à un autre quand ces deux sites ont une relation de «co-marketing». La méthode présentée permet au second site de savoir si le client vient du premier site. Elle repose sur la réalisation d'un programme de re-direction qui va adjoindre l'URL du site «courant» à la suite de l'URL du site demandé. Il n'est pas question d'octroi de privilège d'accès, au sein d'un réseau de communication, ni de liste de liens d'accès privilégiés. Il y a bien modification d'une URL par un serveur, mais ceci n'est pas fait par un équipement intermédiaire qui appartient au gestionnaire d'accès mais par les serveurs finaux directement.

Le document EP 0 811 939 A divulgue une méthode permettant de fournir un document à un client associé à un serveur dans un réseau distribué, exploitant des serveurs de type Proxy «cache» tels que ceux décrits ci-après dans la présente demande.

Le document US-A-5 761 683 décrit notamment une technique permettant de réécrire une page HTML entrante en fonction d'informations cibles prédéterminées. Quand une chaîne de données cible est trouvée dans le texte d'un document HTML entrant, cette chaîne cible est remplacée, dans le terminal du client, par une chaîne de remplacement associée prédéterminée, avant que le document HTML soit affiché par le navigateur web du terminal client.

L'invention a notamment pour objectif de pallier ces différents inconvénients de l'état de la technique.

Plus précisément, l'un des objectifs de la présente invention est de fournir une technique de gestion d'accès au sein d'un réseau de communication, permettant à un gestionnaire de ces accès d'octroyer des privilèges à ses clients.

Par privilèges, on entend notamment, mais non exclusivement, une modification des coûts d'accès à un site et/ou à un service d'un site, la possibilité d'accéder à un site et/ou à une partie d'un site réservé et/ou à un service particulier d'un site, la possibilité d'accéder à un site et/ou à un service d'un site via un circuit spécifique, ...

L'invention a également pour objectif de fournir une telle technique qui soit simple à mettre en oeuvre et peu coûteuse.

Un autre objectif de l'invention est de fournir une telle technique dont une des variantes de réalisation ne nécessite aucune modification des terminaux des clients.

Encore un autre objectif de l'invention est de fournir une telle technique dont une des variantes de réalisation ne nécessite aucune modification des équipements des gestionnaires des sites.

Ces différents objectifs, ainsi que d'autres qui apparaîtront par la suite, sont atteints selon l'invention à l'aide d'un procédé selon la revendication 1.

La présente invention est donc basée sur le concept général de remplacement d'un "lien d'accès privilégié" par un "lien d'accès de substitution", de façon que le client accède à une destination donnée (qui peut être distincte de celle qu'il a demandée initialement) via un équipement intermédiaire. D'une façon générale, ce remplacement est effectué en amont de l'équipement intermédiaire (différentes variantes de réalisation de ce remplacement sont proposées et discutées en détail ci-dessous).

On notera qu'afin de pouvoir rediriger le client vers sa destination finale, l'équipement intermédiaire doit préalablement retrouver le "lien d'accès privilégié" que remplace le "lien d'accès de substitution".

De façon avantageuse, ledit gestionnaire d'accès au sein du réseau de communication appartient au groupe comprenant : les fournisseurs d'accès, assurant une interconnexion entre ledit réseau de communication et un réseau de télécommunication, et les prestataires non fournisseurs d'accès.

Par prestataire non fournisseur d'accès, on entend notamment mais non exclusivement une société gérant un équipement intermédiaire tel que précité, et de ce fait capable d'octroyer des privilèges à ses clients, sans pour autant être un fournisseur d'accès.

Avantageusement, le remplacement d'un desdits liens d'accès privilégié et/ou l'activation d'un desdits liens d'accès de substitution requiert l'accord dudit client et/ou dudit gestionnaire de site et/ou dudit gestionnaire d'accès.

En d'autres termes, diverses fonctions de contrôle d'accès, gérées par différentes entités du système, peuvent être prévues, seules ou en combinaison.

Afin d'obtenir l'accord du gestionnaire de site, le gestionnaire d'accès peut déporter vers celui-ci une demande d'autorisation, via la mise en place d'un protocole sécurisé.

Préférentiellement, ledit accord du gestionnaire de site et/ou dudit gestionnaire d'accès est fonction de l'appartenance dudit client à un groupe de clients prédéterminés.

Par groupe de clients, on entend notamment, mais non exclusivement, un groupe d'abonnés auprès du gestionnaire de site, du gestionnaire d'accès, ..., ou encore un groupe de clients d'une même zone géographique.

De façon préférentielle, en l'absence de l'accord dudit client et/ou dudit gestionnaire de site, il est proposé audit client d'accéder sans privilège audit site et/ou audit service correspondant au lien d'accès privilégié activé et/ou reçu.

Dans un mode de réalisation avantageux de l'invention, lesdits liens d'accès privilégié et/ou lesdits liens d'accès de substitution sont identifiables directement, sur le terminal d'un desdits clients.

Ainsi, le client est incité à utiliser les sites et/ou les services auxquels il peut accéder avec des privilèges.

De façon préférentielle, ladite identification d'un desdits liens d'accès privilégié et/ou d'un desdits liens d'accès de substitution consiste en une modification de la représentation graphique et/ou sonore, par ledit terminal, dudit lien d'accès privilégié et/ou dudit lien d'accès de substitution.

Avantageusement, afin de retrouver le lien d'accès privilégié que remplace ledit lien d'accès de substitution, ledit équipement intermédiaire met en oeuvre une technique appartenant au groupe comprenant :
- désencapsulage dudit lien d'accès privilégié contenu dans ledit lien d'accès de substitution ;
- consultation d'une table de correspondance associant à chaque lien d'accès de substitution le lien d'accès privilégié qu'il remplace.

La première variante (désencapsulage) suppose bien sûr un encapsulage préalable du lien d'accès privilégié dans le lien d'accès de substitution lors de l'étape dite de remplacement.

De façon avantageuse, les privilèges associés à chacun desdits liens d'accès de substitution appartiennent au groupe comprenant :
- modification des coûts d'accès à un site et/ou à un service d'un site ;
- accès à un site et/ou à une partie d'un site réservé ;
- accès à un service particulier d'un site ;
- accès à un site et/ou à un service d'un site via un circuit spécifique.

Par coûts d'accès, on entend par exemple de premiers coûts d'accès jusqu'au réseau de communication (via un ou plusieurs réseau(x) intermédiaires, fixe (RTC) ou mobile (GSM, ...)), et/ou de seconds coûts d'accès à l'intérieur même du réseau de communication. Ainsi, dans le cas d'Internet, les premiers coûts sont nuls tandis que les seconds coûts, qui ne le sont pas, sont généralement à la charge du client (prestation payante du fournisseur d'accès).

Dans un mode de réalisation particulier de l'invention, ledit réseau de communication est un réseau de type internet, et lesdits liens d'accès sont des adresses-destinations de pages d'informations.

Ainsi, dans le cas particulier d'Internet, l'invention s'applique aussi bien au mode de fonctionnement direct qu'au mode de fonctionnement indirect. On rappelle que, quel que soit le mode de fonctionnement, l'activation d'un lien d'accès consiste en l'émission par le navigateur d'une requête contenant l'adresse URL demandée.

Dans une première variante de réalisation avantageuse de l'invention, le procédé comprend une étape de limitation des activations, effectuées par l'ensemble desdits clients, d'au moins un lien d'accès de substitution donné.

De cette façon, le gestionnaire du site (et/ou du service) dont l'accès résulte de l'activation dudit lien d'accès de substitution donné peut limiter les privilèges qu'il entend associer à ce lien d'accès de substitution donné. Par exemple, si le privilège consiste en une prise en charge au moins partielle des coûts d'accès au site (et/ou au service), le gestionnaire du site peut ainsi décider d'un budget à ne pas dépasser dans le cadre de cette prise en charge.

Dans une seconde variante de réalisation avantageuse de l'invention, le procédé comprend une étape de limitation des activations, effectuées par un groupe d'au moins un client donné, desdits liens d'accès de substitution.

Contrairement à la première variante, on ne s'intéresse pas ici au nombre d'activations d'un unique lien de substitution donné, par tous les clients, mais au nombre d'activations de tous les liens d'accès de substitution, par un ou plusieurs clients donné(s).

Ceci permet au gestionnaire d'accès de vérifier qu'un nombre maximal de consultation par client est respecté. Cette fonctionnalité est particulièrement intéressante pour la consultation en continu (streaming), audio et/ou vidéo, si l'infrastructure sait en contrôler la diffusion. On contrôle par exemple le nombre de séances visualisées par chaque client.

Dans un mode de réalisation particulier, l'activation d'un desdits liens d'accès de substitution par un utilisateur donné est suivie, après un délai déterminé, d'une étape de confirmation, par ledit utilisateur donné, de l'utilisation du site et/ou du service dont l'accès résulte de ladite activation. En l'absence de confirmation par ledit utilisateur donné, ladite utilisation est interrompue.

Avantageusement, lors de chaque activation d'un desdits liens d'accès de substitution, le gestionnaire d'accès fournit au gestionnaire de site:
- une requête d'un desdits clients, avec ledit lien d'accès de substitution ;
- au moins une information complémentaire, relative audit gestionnaire d'accès et/ou au mode d'accès dudit client et/eu audit client.

L'invention concerne également un système selon la revendication 12.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 schématise un exemple de configuration de réseaux de communication au sein de laquelle peut être mise en oeuvre l'invention ;
- la figure 2 illustre schématiquement les étapes successives d'un premier mode de réalisation du procédé d'octroi de privilèges qui n'est pas couvert par les revendications mais est utile à la compréhension de l'invention ; et
- la figure 3 illustre schématiquement les étapes successives d'un second mode de réalisation du procédé d'octroi de privilèges selon l'invention.

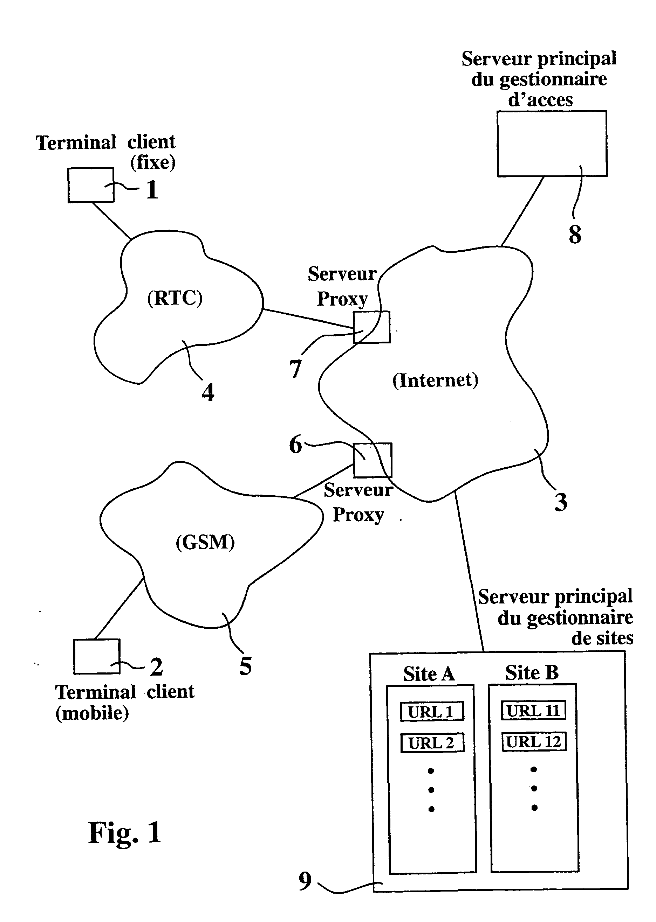

Dans la configuration de la figure 1, les clients sont abonnés soit au réseau téléphonique commuté (RTC) 4, soit à un réseau de radiocommunication (par exemple selon la norme GSM, ou autre) 5, et utilisent respectivement soit un terminal fixe 1, soit un terminal mobile 2. Ils peuvent accéder à des sites Web du réseau Internet 3, par l'intermédiaire d'une passerelle (ou serveur Proxy) 6, 7 interconnectant le réseau 4, 5 auquel les clients sont abonnés et le réseau Internet 3.

Les serveurs Proxy (ou serveurs relais) sont gérés par un fournisseur d'accès à Internet, qui est par exemple également l'opérateur du réseau 4, 5 auquel le client est abonné.

D'une façon générale, on distingue :
- les serveurs Proxy "cache", qui permettent de stocker les pages Web qui font l'objet des requêtes les plus fréquentes, de façon à éviter des requêtes sur les serveurs distants. Dans ce cas, les requêtes gérées par les serveurs Proxy ne sont donc pas toujours répercutées auprès du site final ;
- les serveurs Proxy "pass", qui permettent de modifier dynamiquement une requête (changement d'un nom de serveur par un autre), de façon à permettre un partage de charge entre serveurs.

Dans le cadre du mode de réalisation décrit, il est à noter qu'il est essentiel que l'opérateur contrôle le premier serveur Proxy "cache" que rencontre l'utilisateur quand il accède au réseau Internet, ce qui peut être le cas si l'opérateur est l'opérateur d'accès.

Les liens d'accès que les clients activent pour accéder aux différents sites disponibles sont des adresses URL. On rappelle qu'une adresse URL est une adresse-destination d'une page Web. Elle comprend :
- le type de service (par exemple "http://" pour un serveur Web) ;
- l'adresse FDQN ("pour "Full Qualified Domain Name" en anglais) du serveur, qui est une transcription d'une adresse IP en mots, selon la règle suivante : "www.organisation.domaine" ;
- la situation de la page Web recherchée sur le serveur (arborescence de répertoire(s)) ;
- le nom de la page Web recherchée ;
- éventuellement, des paramètres complémentaires fournis par le client pour préciser le contexte de sa demande.

Par exemple, l'adresse URL "http://www.sfr.com/abonnés/2000.htm" permet de lancer une requête à un serveur Web dont l'adresse FDQN est "www.sfr.com", pour lui demander de chercher, dans le répertoire "abonnés", la page Web "2000.htm";

Dans le mode de réalisation particulier présenté ici, l'invention concerne l'octroi de privilèges à certains de ses clients par un gestionnaire d'accès au sein du réseau Internet 3.

Le gestionnaire d'accès est par exemple également le fournisseur d'accès à Internet (qui est lui-même par exemple également l'opérateur du réseau 4, 5 auquel le client est abonné). Dans ce cas, il dispose d'un serveur principal 8 et des serveurs Proxy 6, 7 précités.

Le serveur principal 8 du gestionnaire d'accès, et éventuellement les serveurs Proxy 6, 7, permet(tent) de gérer une liste d'adresses URL (ou liens) d'accès privilégié, correspondant chacune à une page Web particulière. On suppose qu'un accord de partenariat a été conclu entre le gestionnaire d'accès et le ou les gestionnaire(s) du ou des site(s) dont les pages Web portent ces adresses URL d'accès privilégié. Le gestionnaire de sites est parfois aussi appelé fournisseur d'informations et/ou de services.

Il est clair que dans la liste d'adresses URL d'accès privilégié, on peut trouver des adresses URL correspondant à plusieurs pages Web d'un même site. Cette liste contient par exemple de toutes les pages d'un site (dont les adresses URL contiennent une même adresse FDQN), ou encore de toutes les pages d'un répertoire ou d'un sous-répertoire donné d'un site (dont les adresses URL contiennent une même adresse FDQN et un ou plusieurs même(s) niveau(x) d'arborescence de répertoire(s)).

Dans un souci de simplification, et comme illustré sur la figure 1, on suppose dans la suite de la description que la liste d'adresses URL d'accès privilégié comprend uniquement les adresses URL (URL1, URL2, ...) correspondant aux pages Web d'un site A, localisé sur le serveur principal 9 d'un unique gestionnaire de sites. Il est à noter que ce serveur 9 supporte également un autre site B, présenté en détail par la suite, dont les pages Web portent les adresses URL11, URL12, ...

Lorsqu'un client active (dans une requête) ou reçoit (dans une page Web) une des adresses URL d'accès privilégié, le principe général de l'invention consiste à remplacer celle-ci par une adresse URL de substitution, qui contient celle du serveur principal 8 du gestionnaire d'accès. Ainsi, c'est finalement une requête vers l'adresse du serveur principal 8 du gestionnaire d'accès, qui est émise par le client. A partir de cette première requête, le serveur principal 8 du gestionnaire d'accès retrouve l'adresse URL d'accès privilégié et construit une seconde requête soit vers celle-ci soit vers une autre adresse URL prédéterminée. Quand il reçoit la réponse à cette seconde requête, il la renvoie au client, pour qui l'opération est transparente.

Par exemple, le client disposant du terminal mobile 2 active l'adresse URL1 du site A du gestionnaire de sites. Dans le serveur Proxy 6, celle-ci est remplacée par une adresse URL' contenant l'adresse "www.sfr.com" du serveur principal 8 du gestionnaire d'accès. Ce dernier construit une requête soit vers l'adresse URL1 du site A, soit vers l'adresse URL11 du site B.

Ce mécanisme de passage par le serveur principal 8 du gestionnaire d'accès permet à ce dernier d'octroyer des privilèges à au moins certains de ses clients.

Il permet notamment au gestionnaire d'accès de distinguer les flux commerciaux (pages Web publicitaires), pour pouvoir les facturer (c'est-à-dire facturer leur accès) non pas en totalité au client mais au moins en partie au(x) gestionnaire(s) du ou des site(s) contenant ces pages Web publicitaires. On peut même prévoir que le gestionnaire d'accès prenne également en charge une partie des coûts d'accès. Une des applications de la présente invention est donc une nouvelle approche de la promotion commerciale sur Internet.

Dans la suite de la description, on considère uniquement le cas d'un privilège consistant en une réduction (partielle ou totale) pour le client des coûts d'accès liés à l'accès à une ou plusieurs des pages Web particulières précitées. Il est clair cependant que l'invention s'applique également à d'autres privilèges, tels que notamment l'accès à un site réservé et/ou à au moins une page Web d'un réservé.

Le mécanisme de passage par le serveur principal 8 du gestionnaire d'accès permet aussi à ce dernier d'assurer une fonction de contrôle d'accès. En effet, le remplacement effectif d'une adresse URL d'accès privilégié par une adresse URL d'accès de substitution peut être lié à l'obtention préalable d'un accord du gestionnaire de sites et/ou du gestionnaire d'accès et/ou du client. De façon alternative (ou en combinaison), on peut prévoir que l'activation d'une adresse URL d'accès de substitution nécessite elle aussi l'obtention préalable d'un accord.

Si l'accord est demandé au client, ce dernier peut être informé, préalablement à sa prise de décision, de la nature du privilège qu'on lui propose.

Par exemple, le gestionnaire de sites peut n'accepter de prendre en charge les coûts de connexion à certaines des pages Web de son site que pour des clients situés dans une zone géographique donnée (cas d'une campagne commerciale limitée à une ville), ou appartenant à un groupe donné (cas des clients abonnés auprès de ce gestionnaire de sites ou auprès du gestionnaire d'accès).

En l'absence d'accord, il est possible de proposer au client d'accéder quand même à la page Web demandée, mais dans ce cas sans aucun privilège. Par exemple, le client accepte de payer les coûts d'accès à une page Web commerciale.

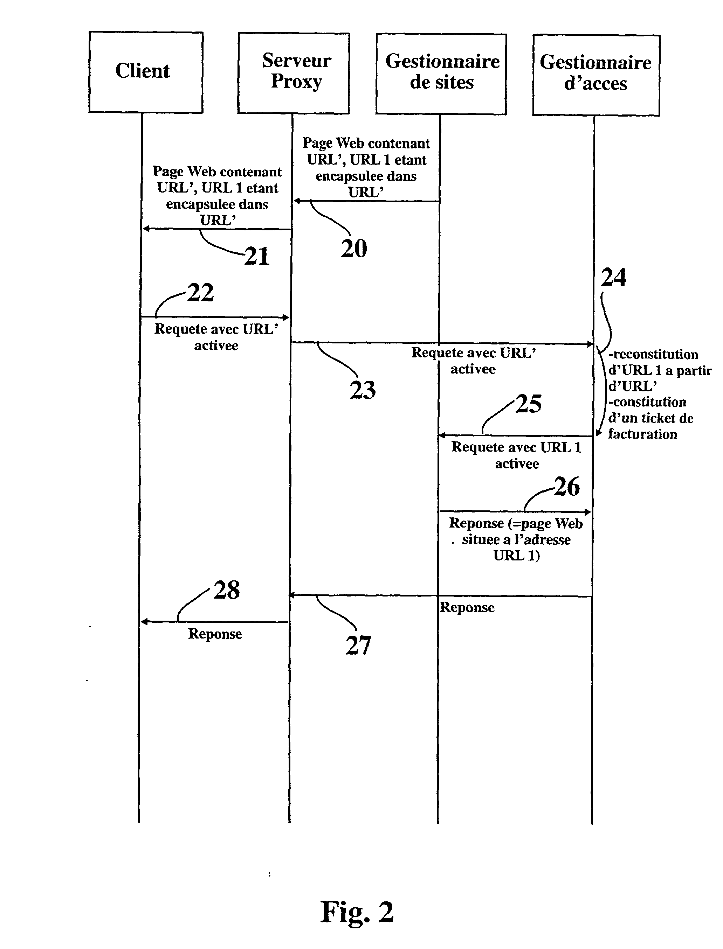

On présente maintenant, en relation avec la figure 2, un premier mode de réalisation particulier du procédé d'octroi de privilèges qui n'est pas couvert par les revendications mais est utile à la compréhension de l'invention.

On suppose ici que le gestionnaire de sites souhaite prendre en charge la totalité des coûts d'accès à la page Web (de son site A) située à l'adresse URL1. Pour cela, il remplace, de façon statique préalable ("encapsulage"), cette adresse URL1 d'accès privilégié par une adresse URL' d'accès de substitution. L'adresse URL' est celle discutée ci-dessus en relation avec la figure 1, et contient donc l'adresse "www.sfr.com" du serveur principal 8 du gestionnaire d'accès. Elle s'écrit par exemple :
"http://www.sfr.com/free/encaps=ZZZ,mode=free, cond=100%"
où ZZZ représente un encodage de l'adresse URL1 destiné à permettre sa reconstitution par le serveur principal 8 du gestionnaire d'accès.

On décrit maintenant les étapes successives illustrées schématiquement sur la figure 2.

Etapes 20 et 21 : le client reçoit du gestionnaire de sites, via le serveur proxy, une page Web incluant au moins un hyperlien vers une autre page Web. Cet hyperlien comprend l'adresse URL' précitée et une zone associée de lien hypertexte (destinée à apparaître au sein de la page Web lorsque celle-ci est affichée à l'écran du terminal client).

Il est à noter qu'afin d'avertir le client de la nature particulière de l'adresse URL', celle-ci et/ou sa zone de lien hypertexte associée peuvent être modifiées dans leur représentation graphique (par exemple, présence d'une chaîne de caractères particulière telle que "800") et/ou sonore.

Etape 22 et 23 : le client émet une requête avec l'adresse URL' activée. Cette requête est transmise, via le serveur proxy, au serveur principal du gestionnaire d'accès.

Etape 24 : à réception de cette requête, le serveur principal du gestionnaire d'accès reconstitue l'adresse URL1 (par désencapsulage ou utilisation d'une table de correspondance) et constitue un ticket de facturation (ou CDR. pour "Call Detailed Record" en anglais). Ce ticket de facturation peut contenir des informations sur l'heure, la méthode d'accès, le volume transféré, la durée du transfert, l'adresse URL1 requise, ... Il peut servir de base à une nouvelle clef de répartition des coûts entre le client, le gestionnaire de sites, le gestionnaire d'accès, ou tout autre entité partie prenante au système d'octroi de privilèges.

Le serveur principal du gestionnaire d'accès peut également demander l'accord du client sur les conditions (gratuité partielle ou totale) proposées. Pour ce faire, plusieurs techniques sont possibles. Tout d'abord utiliser l'accusé de réception associé à la requête pour signifier les conditions, ainsi que des informations supplémentaires ("Ceci est une vidéo, de durée ..., sa transmission sera défalquée de votre communication. Voulez-vous la recevoir ? Oui/Non"). Il est à noter que cette partie de la communication peut s'effectuer ou non via des liaisons sécurisées et/ou signées.

Etapes 25 et 26 : le serveur principal du gestionnaire d'accès émet une requête avec l'adresse URL1 activée. Cette requête est transmise au serveur principal du gestionnaire de sites qui répond en envoyant la page Web située à l'adresse URL1.

Etape 27 et 28 : le serveur principal du gestionnaire d'accès fait parvenir cette réponse au client, via le serveur Proxy.

Il est clair que si le client connaît l'adresse URL' (elle peut être diffusée dans un journal), il peut la saisir directement sur son terminal, et le procédé commence alors directement à l'étape 22.

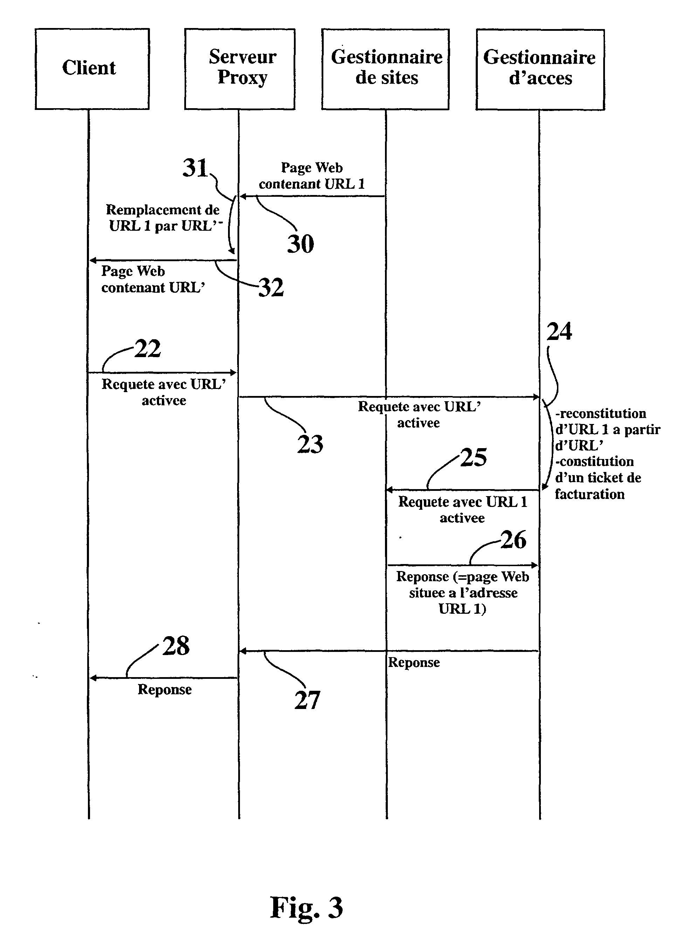

On présente maintenant, en relation avec la figure 3, un second mode de réalisation particulier du procédé d'octroi de privilèges selon l'invention.

Ce second mode de réalisation diffère du premier décrit ci-dessus uniquement dans la technique utilisée pour effectuer le remplacement de l'adresse URL1 d'accès privilégié par l'adresse URL' d'accès de substitution. Seules les trois premières étapes 30 à 32 de ce second mode de réalisation sont concernées et donc décrites ci-dessous. Les étapes inchangées entre les deux modes de réalisation portent les mêmes références numériques 22 à 28.

On suppose à nouveau que le gestionnaire de sites souhaite prendre en charge la totalité des coûts d'accès à la page Web (de son site A) située à l'adresse URL1.

On rappelle par ailleurs que le proxy fait partie de l'équipement du gestionnaire d'accès, ce dernier étant dans l'exemple discuté confondu avec le fournisseur d'accès Internet.

Etape 30 : le gestionnaire de sites envoie à destination du client, via le serveur proxy, une page Web incluant au moins un hyperlien vers la page Web située à l'adresse URL1. Cet hyperlien comprend donc l'adresse URL1 et la zone associée de lien hypertexte.

Etape 31 : le serveur Proxy analyse toutes les réponses (c'est-à-dire les pages Web) qu'il relaie, et y recherche la présence d'une ou plusieurs adresses URL d'accès privilégié (c'est-à-dire l'occurrence d'un certain nombre de chaînes de caractères). Pour cela, le serveur Proxy peut extraire les basiles <A href=xyz> Text </a> dans les réponses html. Lorsqu'il détecte l'une des adresses URL d'accès privilégié (URL1 dans le présent exemple), il effectue de façon dynamique le remplacement de celle-ci, au sein de la page Web, par une adresse URL d'accès de substitution (URL' dans le présent exemple).

Un tel remplacement dynamique peut être effectué dans un serveur Proxy "pass". Il est important de noter que, dans ce cas, on utilise de façon nouvelle et non évidente une fonctionnalité existante mais non conçue à cet effet. En effet, il ne s'agit pas ici de permettre un partage de charge entre serveurs.

Etape 32 : le serveur Proxy fait parvenir la page Web ainsi modifiée au client (c'est-à-dire contenant l'adresse URL').

Il est à noter qu'avec ce second mode de réalisation, le gestionnaire de site n'a pas à modifier les adresses URL d'accès privilégié contenues dans ses pages web.

D'une façon générale, le remplacement peut être effectué par tout équipement du réseau Internet (serveur Proxy, routeur, ...). Dans le cas d'un routeur, celui-ci est par exemple doté d'un logiciel spécialisé pouvant effectuer l'opération précitée d"'espionnage" des trames Internet, sur les paquets HTTP de réponses à des requêtes de type "GET" ou "POST".

Afin de diminuer l'ampleur de la recherche précédant le remplacement, on peut décider de limiter cette recherche à des adresses URL d'accès privilégié incluant une chaîne de caractères particulière. On peut envisager d'inclure cette chaîne dans l'un quelconque des champs constitutifs d'une adresse URL. Ainsi, avec la chaîne "800" et en partant d'une adresse URL du type " http://www.aa.AA/BB/c=CCC,d=DDD", on peut imaginer les cas suivants (cette liste n'est pas exhaustive) :
- http://www.aa.AA/BB/c=CCC,d=800
- http800://www.aa.AA/BB/c=CCC,d=DDD
- http://www.aa.AA/BB/800/c=CCC,d=800
- http://www.aa.AA/800/BB/c=CCC,d=800
- ...

Il est à noter que ces adresses URL peuvent être traitées par le serveur du gestionnaire de sites pour pointer vers la ressource originale, par simple configuration de ce serveur.

Optionnellement, la présente invention prévoit également une limitation des activations des liens d'accès de substitution. Dans une première variante de réalisation, on limite les activations d'un lien d'accès de substitution donné, effectuées par l'ensemble des clients. Dans une seconde variante de réalisation, on limite les activations, effectuées par un client donné (ou un groupe de clients donnés), de l'ensemble des liens d'accès de substitution

Quelle que soit la variante mise en oeuvre, la limitation des activations consiste par exemple à :
- maintenir au moins un compteur d'activations ;
- comparer la valeur du compteur avec un seuil prédéterminé (nombre maximal d'activations sur une période déterminée, nombre maximal d'activations simultanées, nombre minimal d'activations sur une période déterminée, nombre minimal d'activations simultanées, ...);
- déclencher au moins une action appropriée avant et/ou après que la valeur du compteur devient supérieure au seuil prédéterminé.

Par action appropriée, on entend notamment, mais non exclusivement, le déclenchement d'une alarme juste avant que le seuil prédéterminé soit atteint par le compteur, le déclenchement d'une alarme lorsque le seuil prédéterminé est atteint par le compteur, l'interdiction de toute nouvelle activation après que le seuil prédéterminé a été atteint par le compteur, etc.

Egalement optionnellement, l'activation d'un des liens d'accès de substitution par un utilisateur donné est suivie, après un délai déterminé, d'une étape de confirmation, par l'utilisateur donné, de l'utilisation du site et/ou du service dont l'accès résulte de l'activation précitée. En l'absence de confirmation par l'utilisateur donné, l'utilisation est interrompue.

Par exemple, dans le cas d'une consultation en continu (streaming) d'un contenu (par exemple un film) par un client, le gestionnaire d'accès peut ainsi s'assurer que le client paie la transmission après avoir reçu une partie du contenu. La mise en oeuvre de cette fonctionnalité consiste par exemple, lors d'une demande de lecture d'un contenu par un client, à lancer une applet dans le navigateur (browser) du client. Celle-ci demande confirmation de la commande de visualisation du client, et propose un lien d'accès (adresse URL) à appeler pour effectuer cette confirmation. En cas de refus, ou de non-réponse, du client, le serveur du fournisseur de contenu interrompt le process de consultation en continu (streaming).

Selon encore une autre option de l'invention, lors de chaque activation d'un des liens d'accès de substitution, le gestionnaire d'accès fournit au gestionnaire de site :
- une requête d'un des clients, avec le lien d'accès de substitution ;
- une ou plusieurs information(s) complémentaire(s), relative(s) au gestionnaire d'accès et/ou au mode d'accès du client et/ou au client.

La ou les informations complémentaires sont par exemple utilisées par le gestionnaire de site pour calculer le coûts des privilèges qu'il accorde, ou effectuer des statistiques sur la dynamique d'utilisation de ces privilèges, selon les différents modes d'accès, les différents gestionnaires d'accès, les différents clients, etc.

## Revendications

1. Procédé d'octroi de privilèges par un gestionnaire d'accès au sein d'un réseau de communication (3) à au moins certains de ses clients d'un réseau de télécommunication (4, 5), ledit réseau de communication (3) interconnectant une pluralité de sites (A, B) auxquels un client dudit réseau de télécommunication (4, 5) peut sélectivement accéder via un terminal (1, 2) par l'intermédiaire d'une passerelle (6,7) interconnectant le réseau de télécommunication (4, 5) et le réseau de communication (3), en activant un lien d'accès correspondant,
le procédé comprenant une étape de gestion d'une liste de liens d'accès privilégié (URL1), liens d'accès privilégiés correspondant chacun à un site (A) et/ou à un service d'un site, un accord de partenariat ayant été conclu entre ledit gestionnaire d'accès et un gestionnaire dudit site pour lesdits liens d'accès privilégié, la liste étant connue d'un serveur principal du gestionnaire d'accès (8) et de la passerelle (6, 7), et étant localisée dans le serveur principal du gestionnaire de sites (9) et gérée au moyen du serveur principal du gestionnaire d'accès (8) et éventuellement de la passerelle (6, 7),
et, lorsqu'un client active dans une requête ou reçoit dans une page Web une des adresses correspondant à un lien d'accès privilégié (URL1), celui-ci est remplacé dans la passerelle (6, 7) par un lien d'accès de substitution (URL') qui contient l'adresse du serveur principal du gestionnaire d'accès (8), de façon que ledit client accède, via le serveur principal du gestionnaire d'accès (8) qui constitue un équipement intermédiaire (8) dudit réseau de communication correspondant audit lien d'accès de substitution, à une destination appartenant au groupe comprenant:
- ledit site (A) et/ou ledit service correspondant audit lien d'accès privilégié (URL1) activé et/ou reçu ;
- un site (B) et/ou un service différent, distinct de celui correspondant audit lien d'accès privilégié (URL1) activé et/ou reçu
le serveur principal du gestionnaire d'accès (8) retrouvant pour cela l'adresse correspondant au lien d'accès privilégié (URL1) puis construisant une seconde requête et lorsqu'il reçoit la réponse à cette seconde requête la renvoyant audit client.

2. Procédé selon la revendication 1, **caractérisé en ce que** ledit gestionnaire d'accès au sein du réseau de communication appartient au groupe comprenant :
- les fournisseurs d'accès, assurant une interconnexion entre ledit réseau de communication (3) et un réseau de télécommunication (4, 5) ;
- les prestataires non fournisseurs d'accès.

3. Procédé selon l'une quelconque des revendications 1 ou 2, **caractérisé en ce que** lesdits liens d'accès privilégié et/ou lesdits liens d'accès de substitution sont identifiables directement, sur le terminal (1,2) d'un desdits clients.

4. Procédé selon la revendication 3, **caractérisé en ce que** ladite identification d'un desdits liens d'accès privilégié et/ou d'un desdits liens d'accès de substitution consiste en une modification de la représentation graphique et/ou sonore, par ledit terminal, dudit lien d'accès privilégié (URL1) et/ou dudit lien d'accès de substitution (URL').

5. Procédé selon l'une quelconque des revendications 1 à 4, **caractérisé en ce que**, afin de retrouver le lien d'accès privilégié que remplace ledit lien d'accès de substitution, ledit équipement intermédiaire (8) met en oeuvre une technique appartenant au groupe comprenant :
- désencapsulage dudit lien d'accès privilégié contenu dans ledit lien d'accès de substitution ;
- consultation d'une table de correspondance associant à chaque lien d'accès de substitution le lien d'accès privilégié qu'il remplace.

6. Procédé selon l'une quelconque des revendications 1 à 5, **caractérisé en ce que** ledit réseau de communication (3) est un réseau de type internet, et **en ce que** lesdits liens d'accès sont des adresses-destinations (URL) de pages d'informations.

7. Procédé selon l'une quelconque des revendications 1 à 6**, caractérisé en ce qu'**il comprend une étape de limitation des activations, effectuées par l'ensemble desdits clients, d'au moins un lien d'accès de substitution donné.

8. Procédé selon l'une quelconque des revendications 1 à 7, **caractérisé en ce qu'**il comprend une étape de limitation des activations, effectuées par un groupe d'au moins un client donné, desdits liens d'accès de substitution.

9. Procédé selon l'une quelconque des revendications 7 et 8, **caractérisé en ce que** ladite étape de limitation des activations comprend les étapes suivantes :
- maintien d'au moins un compteur lié auxdites activations ;
- comparaison de la valeur dudit compteur avec un seuil prédéterminé ;
- déclenchement d'au moins une action appropriée avant et/ou après que la valeur du compteur devient supérieure audit seuil prédéterminé.

10. Procédé selon l'une quelconque des revendications 1 à 9, **caractérisé en ce que** l'activation d'un desdits liens d'accès de substitution par un utilisateur donné est suivie, après un délai déterminé, d'une étape de confirmation, par ledit utilisateur donné, de l'utilisation du site et/ou du service dont l'accès résulte de ladite activation,
et **en ce que**, en l'absence de confirmation par ledit utilisateur donné, ladite utilisation est interrompue.

11. Procédé selon l'une quelconque des revendications 1 à 10, **caractérisé en ce que**, lors de chaque activation d'un desdits liens d'accès de substitution, le gestionnaire d'accès fournit au gestionnaire de site :
- une requête d'un desdits clients, avec ledit lien d'accès de substitution ;
- au moins une information complémentaire, relative audit gestionnaire d'accès et/ou au mode d'accès dudit client et/ou audit client.

12. Système d'octroi de privilèges par un gestionnaire d'accès au sein d'un réseau de communication (3) à au moins certains de ses clients d'un réseau de télécommunication (4, 5), ledit réseau de communication (3) interconnectant une pluralité de sites (A, B) auxquels un client dudit réseau de télécommunication (4, 5) peut sélectivement accéder via un terminal (1,2) par l'intermédiaire d'une passerelle (6, 7) interconnectant le réseau de télécommunication (4, 5) et le réseau de communication (3), en activant un lien d'accès correspondant, le système comprenant :
- des moyens de gestion d'une liste de liens d'accès privilégié (URL1), liens d'accès privilégiés correspondant chacun à un site (A) et/ou à un service d'un site, un accord de partenariat ayant été conclu entre ledit gestionnaire d'accès et un gestionnaire dudit site pour lesdits liens d'accès privilégié, la liste étant connue d'un serveur principal du gestionnaire d'accès (8) et de la passerelle (6, 7), et étant localisée dans le serveur principal du gestionnaire de sites (9) et gérée au moyen du serveur principal du gestionnaire d'accès (8) et éventuellement de la passerelle (6, 7) ;
- des moyens de remplacement localisés dans la passerelle (6, 7) et tels que, lorsqu'un client active dans une requête ou reçoit dans une page Web une des adresses correspondant à un lien d'accès privilégié (URL1), celui-ci est remplacé, par un lien d'accès de substitution (URL') qui contient l'adresse du serveur principal du gestionnaire d'accès (8),
de façon que ledit client accède, via le serveur principal du gestionnaire d'accès (8) qui constitue un équipement intermédiaire (8) dudit réseau de communication correspondant audit lien d'accès de substitution, à une destination appartenant au groupe comprenant :
- ledit site (A) et/ou ledit service correspondant audit lien d'accès privilégié (URL1) activé et/ou reçu ;
- un site (B) et/ou un service différent, distinct de celui correspondant audit lien d'accès privilégié (URL1) activé et/ou reçu,
le serveur principal du gestionnaire d'accès (8) retrouvant pour cela l'adresse correspondant au lien d'accès privilégié (URL1) puis construisant une seconde requête et lorsqu'il reçoit la réponse à cette seconde requête la renvoyant audit client.

## Patentansprüche

1. Verfahren zur Privilegienverleihung von einem Zugriffsverwalter in einem Kommunikationsnetz (3) an wenigstens bestimmte seiner Teilnehmer an einem Fernsprechnetz (4, 5), wobei das Kommunikationsnetz (3) mehrere Sites (A, B) verbindet, auf die ein Teilnehmer des Fernsprechnetzes (4, 5) von einem Endgerät (1, 2) aus über eine Schnittstelle (6, 7), die das Fernsprechnetz (4, 5) mit dem Kommunikationsnetz (3) verbindet, selektiv Zugriff nehmen kann, indem er einen entsprechenden Link aktiviert,
wobei das Verfahren den Schritt der Verwaltung einer Liste von Links für bevorrechtigten Zugriff (URL1) enthält, wobei die Links für bevorrechtigten Zugriff jeweils einer Site (A) und/oder einem Dienst an einer Site entsprechen, wobei zwischen dem Zugriffsverwalter und einem Verwalter der Site über die genannten Links für bevorrechtigten Zugriff ein Kooperationsvertrag geschlossen worden ist, wobei die Liste im Hauptserver des Zugriffsverwalters (8) und in der Schnittstelle (6, 7) bekannt ist und im Hauptserver des Siteverwalters (9) lokalisiert ist und mittels des Hauptservers des Zugriffsverwalters (8) und gegebenenfalls der Schnittstelle (6, 7) verwaltet wird,
und wenn ein Teilnehmer in einer Anfrage eine einem Link für bevorrechtigten Zugriff entsprechende Adresse (URL1) aktiviert oder eine solche in einer Web-Seite empfängt, wird dieser in der Schnittstelle (6, 7) durch einen Ersatz-Link (URL'), der die Adresse des Hauptservers des Zugriffsverwalters (8) enthält, ersetzt, so dass der Teilnehmer über den Hauptserver des Zugriffsverwalters (8), der eine Zwischeneinrichtung (8) des Kommunikationsnetzes ist, die dem Ersatz-Link entspricht, Zugriff auf eine Zieladresse nehmen kann, die zu einer Gruppe gehört, welche umfasst:
- die angegebene Site (A) und/oder den angegebenen Dienst, welche/r dem aktivierten und/oder empfangenen Link für bevorrechtigten Zugriff entspricht,
- eine Site (B) und/oder einen anderen Dienst, die bzw. der sich von demjenigen unterscheidet, welcher dem aktivierten und/oder empfangenen Link für bevorrechtigten Zugriff entspricht,
wobei der Hauptserver des Zugriffsverwalters (8) **dadurch** die dem Link für bevorrechtigen Zugriff (URL1) entsprechende Adresse findet und daraufhin eine zweite Anfrage bildet und, wenn er die Antwort auf diese zweite Anfrage empfängt, diese Antwort an den Teilnehmer übermittelt.

2. Verfahren nach Anspruch 1,
**dadurch gekennzeichnet, dass** der Zugriffsverwalter innerhalb des Kommunikationsnetzes zu einer Gruppe gehört, die umfasst:
- die Provider, welche die Verbindung zwischen dem Kommunikationsnetz (3) und einem Fernsprechnetz (4, 5) sicherstellen,
- die Diensteanbieter, die keine Provider sind.

3. Verfahren nach einem der Ansprüche 1 oder 2,
**dadurch gekennzeichnet, dass** die Links für bevorrechtigten Zugriff und/oder die Ersatz-Links am Endgerät (1, 2) eines der Teilnehmer direkt erkennbar sind.

4. Verfahren nach Anspruch 3,
**dadurch gekennzeichnet, dass** die Erkennung eines der Links für bevorrechtigten Zugriff und/oder eines der Ersatz-Links in einer Modifikation der graphischen und/oder der Tonwiedergabe des Links für bevorrechtigten Zugriff (URL1) und/oder des Ersatz-Links (URL') durch das Endgerät besteht.

5. Verfahren nach einem der Ansprüche 1 bis 4,
**dadurch gekennzeichnet, dass** die Zwischeneinrichtung (8) zum Auffinden des Links für bevorrechtigten Zugriff, der durch den Ersatz-Link ersetzt wird, eine Technik nutzt, welche in folgende Gruppe gehört:
- Entkapselung des Links für bevorrechtigten Zugriff in dem Ersatz-Link,
- Konsultation einer Entsprechungstabelle, in der jeder Ersatz-Link dem Link für bevorrechtigten Zugriff, den er ersetzt, zugeordnet ist.

6. Verfahren nach einem der Ansprüche 1 bis 5,
**dadurch gekennzeichnet, dass** das Kommunikationsnetz (3) ein Netz wie das Internet ist und dass die Links Zieladressen (URL) von Datenseiten sind.

7. Verfahren nach einem der Ansprüche 1 bis 6,
**dadurch gekennzeichnet, dass** es einen Schritt der Begrenzung der Aktivierungen, welche von allen Teilnehmern vorgenommen werden, auf wenigstens einen gegebenen Ersatz-Link enthält.

8. Verfahren nach einem der Ansprüche 1 bis 7,
**dadurch gekennzeichnet, dass** es einen Schritt der Begrenzung der Aktivierungen der Ersatz-Links enthält, die von einer Gruppe von mindestens einem Teilnehmer vorgenommen werden.

9. Verfahren nach einem der Ansprüche 7 oder 8,
**dadurch gekennzeichnet, dass** der Schritt der Aktivierungsbegrenzung die folgenden Schritte umfasst:
- Vorhalten mindestens eines Zählers für die Aktivierungen,
- Vergleichen des Zählerwerts mit einem vorgegebenen Schwellenwert,
- Auslösen von mindestens einer geeigneten Aktion, bevor und/oder nachdem der Zählerwert den vorgegebenen Schwellenwert überschritten hat.

10. Verfahren nach einem der Ansprüche 1 bis 9,
**dadurch gekennzeichnet, dass** auf die Aktivierung eines der Ersatz-Links durch einen Nutzer nach einer festgelegten Verzögerung ein Schritt der Bestätigung durch den vorgenannten Nutzer folgt, dass er die Site und/oder den Dienst nutzt, auf die bzw. den er durch die Aktivierung Zugriff genommen hat, und dass bei fehlender Bestätigung durch den vorgenannten Nutzer die Nutzung unterbrochen wird.

11. Verfahren nach einem der Ansprüche 1 bis 10,
**dadurch gekennzeichnet, dass** bei jeder Aktivierung eines der Ersatz-Links der Zugriffsverwalter an den Siteverwalter folgendes übermittelt:
- eine Anfrage eines der genannten Teilnehmer, mit dem Ersatz-Link
- wenigstens eine Zusatzinformation betreffend den Zugriffsverwalter und/oder die Art des Zugriffs durch den Teilnehmer und/oder auf den Teilnehmer.

12. System zur Privilegienverleihung durch einen Zugriffsverwalter innerhalb eines Kommunikationsnetzes (3) an mindestens einige seiner Teilnehmer an einem Fernsprechnetz (4, 5), wobei das Kommunikationsnetz (3) mehrere Sites (A, B) miteinander verbindet, auf die ein Teilnehmer am Fernsprechnetz (4, 5) von einem Endgerät (1, 2) aus über eine Schnittstelle (6, 7), welche das Fernsprechnetz (4, 5) mit dem Kommunikationsnetz (3) verbindet, selektiv Zugriff nehmen kann, indem er einen entsprechenden Link aktiviert, wobei das System umfasst:
- Mittel zur Verwaltung einer Liste von Links für bevorrechtigten Zugriff (URL1), wobei die Links für bevorrechtigten Zugriff jeweils einer Site (A) und/oder einem Dienst einer Site entsprechen, wobei zwischen dem Zugriffsverwalter und einem Siteverwalter über die Links für bevorrechtigten Zugriff ein Kooperationsvertrag geschlossen wurde, wobei die Liste im Hauptserver des Zugriffsverwalters (8) und in der Schnittstelle (6, 7) bekannt ist, im Hauptserver des Siteverwalters (9) enthalten ist und mittels des Hauptservers des Zugriffsverwalters (8) und gegebenenfalls der Schnittstelle (6, 7) verwaltet wird,
- Ersatzmittel in der Schnittstelle (6, 7) damit dann, wenn ein Teilnehmer bei einer Anfrage eine der Adressen aktiviert, die einem Link für bevorrechtigten Zugriff (URL1) entsprechen, oder in einer Web-Seite eine dieser Adressen empfängt, der Link für bevorrechtigten Zugriff durch einen ErsatzLink (URL') ersetzt wird, der die Adresse des Hauptservers des Zugriffsverwalters (8) enthält,
so dass der Teilnehmer über den Hauptserver des Zugriffsverwalters (8), der eine Zwischeneinrichtung (8) des Kommunikationsnetzes darstellt, die dem Ersatz-Link entspricht, Zugriff auf eine Zieladresse erhält, die zu einer Gruppe gehört, die umfasst:
- die genannte Site (A) und/oder den genannten Dienst, die bzw. der dem aktivierten und/oder empfangenen Link für bevorrechtigten Zugriff (URL1) entspricht;
- eine Site (B) und/oder einen anderen Dienst, die bzw. der sich von dem aktivierten und/oder empfangenen Link für bevorrechtigten Zugriff (URL1) unterscheidet,
wobei der Hauptserver des Zugriffsverwalters (8) folglich die dem Link für bevorrechtigten Zugriff (URL1) entsprechende Adresse findet und daraufhin eine zweite Anfrage bildet und, wenn er die Antwort auf diese zweite Anfrage empfangen hat, diese Antwort an den Teilnehmer zurücksendet.

## Claims

1. Method for an access manager in a communication network (3) to grant privileges to at least some of its clients from a telecommunication network (4, 5), the said communication network (3) interconnecting a plurality of sites (A, B) which a client of the said telecommunication network (4, 5) can selectively access via a terminal (1, 2) through a gateway (6, 7) interconnecting the telecommunication network (4, 5) and the communication network (3), by activating a corresponding access link, the method including a step for managing a list of privileged access links (URL1), each privileged access link corresponding to a site (A) and/or to a service of a site, a partnership agreement having been concluded between the said access manager and a manager of the said site for the said privileged access links, the list being known to a main server (8) of the access manager and to the gateway (6, 7), and being located in the site manager's main server (9) and managed by the access manager's main server (8) and if necessary by the gateway (6, 7), and, when a client activates in a request or receives in a web page one of the addresses corresponding to a privileged access link (URL1), the said privileged access link is replaced in the gateway (6, 7) by a substitute access link (URL') which contains the address of the access manager's main server (8), such that the said client accesses, via the access manager's main server (8) which forms an item of intermediate network equipment (8) of the said communication network corresponding to the said substitute access link, a destination belonging to the group including:
- the said site (A) and/or the said service corresponding to the said activated and/or received privileged access link (URL1);
- a site (B) and/or a different service, that is separate from that corresponding to the said activated and/or received privileged access link (URL1),
the access manager's main server (8) finding for this the address corresponding to the privileged access link (URL1), then constructing a second request and, when it receives the response to this second request, sending it to the client.

2. Method according to Claim 1, **characterised in that** the said access manager in the communication network belongs to the group including:
- access providers, providing interconnection between the said communication network (3) and a telecommunication network (4, 5);
- service providers not concerned with access provision.

3. Method according to either of Claims 1 and 2, **characterised in that** the said privileged access links and/or the said substitute access links can be identified directly on the terminal (1, 2) of one of the said clients.

4. Method according to Claim 3, **characterised in that** the said identification of one of the privileged access links and/or of one of the substitute access links entails the terminal changing the graphical and/or audible representation of the said privileged access link (URL1) and/or of the said substitute access link (URL').

5. Method according to any one of Claims 1 to 4, **characterised in that**, in order to find the privileged access link that the said substitute access link replaces, the said intermediate equipment (8) executes a technique belonging to the group including:
- de-encapsulation of the said privileged access link contained in the said substitute access link;
- consultation of a correspondence table mapping each substitute access link to the privileged access link that it replaces.

6. Method according to any one of Claims 1 to 5, **characterised in that** the said communication network (3) is an internet type network, and **in that** the said access links are destination addresses (URLs) to information pages.

7. Method according to any one of Claims 1 to 6, **characterised in that** it includes a step for limiting activations of at least one given substitute access link, which activations are performed by all of the said clients.

8. Method according to any one of Claims 1 to 7, **characterised in that** it includes a step for limiting activations of the said substitute access links, which activations are performed by a group of at least one given client.

9. Method according to either of Claims 7 and 8, **characterised in that** the said activation limiting step includes the following steps:
- keeping at least one counter that is linked to the said activations;
- comparison of the value of the said counter with a predetermined threshold;
- triggering of at least one appropriate action before and/or after the counter value exceeds the said predetermined threshold.

10. Method according to any one of Claims 1 to 9, **characterised in that** the activation of one of the said substitute access links by a given user is followed by, after a determined delay, a step for the said given user to confirm the use of the site and/or service whose access results from the said activation, and **in that**, in the absence of a confirmation by the said given user, the said use is interrupted.

11. Method according to any one of Claims 1 to 10, **characterised in that**, during each activation of one of the said substitute access links, the access manager supplies to the site manager:
- a request from one of the said clients, with the said substitute access link;
- at least one additional item of information related to the said access manager and/or to the mode of access by the said client and/or to the said client.

12. System for an access manager in a communication network (3) to grant privileges to at least some of its clients from a telecommunication network (4, 5), the said communication network (3) interconnecting a plurality of sites (A, B) which a client of the said telecommunication network (4, 5) can selectively access via a terminal (1, 2) through a gateway (6, 7) interconnecting the telecommunication network (4, 5) and the communication network (3), by activating a corresponding access link, the system including:
- means for managing a list of privileged access links (URL1), each privileged access link corresponding to a site (A) and/or to a service of a site, a partnership agreement having been concluded between the said access manager and a manager of the said site for the said privileged access links, the list being known to a main server (8) of the access manager and to the gateway (6, 7), and being located in the site manager's main server (9) and managed by the access manager's main server (8) and if necessary by the gateway (6, 7);
- replacement means located in the gateway (6, 7) and such that, when a client activates in a request or receives in a web page one of the addresses corresponding to a privileged access link (URL1), the said privileged access link is replaced by a substitute access link (URL') which contains the address of the access manager's main server (8),
such that the said client accesses, via the access manager's main server (8) which forms an item of intermediate network equipment (8) of the said communication network corresponding to the said substitute access link, a destination belonging to the group including:
- the said site (A) and/or the said service corresponding to the said activated and/or received privileged access link (URL1);
- a site (B) and/or a different service, that is separate from that corresponding to the said activated and/or received privileged access link (URL1),
the access manager's main server (8) finding for this the address corresponding to the privileged access link (URL1), then constructing a second request and, when it receives the response to this second request, sending it to the client.
